# EUROPEAN PATENT APPLICATION

(11) **EP 4 191 713 A1**
(43) Date of publication of application: **07.06.2023**
(21) Application number: 21851170.7
(22) Date of filing: 16.07.2021
(51) Int. Cl.: H01M 4/70, H01M 4/66, H01M 4/02, H01M 10/04

(54) **BIPOLAR CURRENT COLLECTOR, ELECTRODE SHEET, CELL AND SECONDARY BATTERY**

(30) Priority: 28.07.2020 CN 202021523469 U
(71) Applicant: Shenzhen Hairun New Energy Technology Co., Ltd., Shenzhen, Guangdong 518057 (CN); Xiamen Hithium Energy Storage Technology Co., Ltd., Xiamen, Fujian 361006 (CN)
(72) Inventor: ZHANG, Qin, Xiamen, Fujian 361006 (CN)
(74) Representative: DREISS Patentanwälte PartG mbB
(86) International application number: PCT/CN2021/106893
(87) International publication number: WO 2022/022303

(57) **Abstract**

Provided are a bipolar current collector (100), an electrode sheet (200), a battery cell and a secondary battery. The bipolar current collector includes an insulation film layer (110), a positive electrode metal layer (120), and a negative electrode metal layer (130). The insulation film layer has a first surface and a second surface in a thickness direction. The insulation film layer has a first region portion (111). In a length direction of the bipolar current collector (100), a first surface located at the first region portion has a first exposed region (1214) and a first metal region (1213), and a second surface located at the first region portion has a second exposed region (1216) and a second metal region (1215). A projection of the first metal region on a reference plane does not exceed a projection of the second exposed region on the reference plane, and a projection of the second metal region on the reference plane does not exceed a projection of the first exposed region on the reference plane. The reference plane is a symmetry surface of the insulation film layer in the thickness direction.

## Description

### CROSS-REFERENCES TO RELATED APPLICATIONS

This application is based on and claims the priority of the Chinese Patent Application No. 202021523469.0, filed on July 28, 2020, the entire content of which is incorporated herein by reference.

### FIELD

The present disclosure relates to the technical field of secondary batteries, and in particular, to a bipolar current collector, an electrode sheet, a battery cell, and a secondary battery.

### BACKGROUND

In a composite current collector, a negative electrode current collector is a polymer layer coated with copper metal layers on both sides of the polymer layer, and a positive electrode current collector is usually a polymer layer coated with aluminum metal layers on both sides thereof the polymer layer. The composite current collector is used to prepare an electrode sheet and a secondary battery.

In order to further improve an energy density of a battery, in the related art, a bipolar current collector is provided, in which a copper layer and an aluminum layer are respectively formed on the two surfaces of an insulation film layer. The copper layer serves as a negative electrode, and the aluminum layer serves as a positive electrode to prepare an electrode sheet and a secondary battery. However, in the process of tab welding, the insulation film layer may be easily penetrated by the welding, and thus the copper layer and the aluminum layer are in contact, thereby resulting in the problem of short circuit between the positive and negative electrodes.

### SUMMARY

The present disclosure aims to provide a bipolar current collector, an electrode sheet, a battery cell, and a secondary battery, capable of alleviating the problem of short circuit between positive and negative electrodes to a certain extent. In a first aspect, the present disclosure provides a bipolar current collector. The bipolar current collector includes an insulation film layer, a positive electrode metal layer, and a negative electrode metal layer. The insulation film layer has a first surface and a second surface in a thickness direction. The positive electrode metal layer is disposed on one of the first surface and the second surface, and the negative electrode metal layer is disposed on the other one of the first surface and the second surface. The insulation film layer has a first region portion configured to be connected to a tab. In a length direction of the bipolar current collector, the first surface located at the first region portion has a first exposed region and a first metal region, and the second surface located at the first region portion has a second exposed region and a second metal region. The positive electrode metal layer is disposed in one of the first metal region and the second metal region, and the negative electrode metal layer is disposed in the other one of the first metal region and the second metal region. A projection of the first metal region on a reference plane does not exceed a projection of the second exposed region on the reference plane. A projection of the second metal region on the reference plane does not exceed a projection of the first exposed region on the reference plane. The reference plane is a symmetry surface of the insulation film layer in the thickness direction.

In the bipolar current collector according to the embodiments of the present disclosure, the symmetry surface of the insulation film layer in the thickness direction is used as the reference plane; the projection of the first metal region on the reference plane does not exceed the projection of the second exposed region on the reference plane; and the projection of the second metal region on the reference plane does not exceed the projection of the first exposed region on the reference plane. In this way, when the first metal region or the second metal region is connected to the corresponding tab, due to the presence of the exposed region on the surface of the insulation film layer opposite to the first metal region or the second metal region, it can be avoided that the positive electrode metal layer and the negative electrode metal layer on both surfaces of the insulation film layer are in contact and in conduction, so as to avoid the problem of the short circuit between the positive and negative electrodes to a certain extent.

According to some embodiments of the present disclosure, an area of the projection of the first metal region on the reference plane is smaller than an area of the projection of the corresponding second exposed region on the reference plane, and an area of the projection of the second metal region on the reference plane is smaller than an area of the projection of the corresponding first exposed region on the reference plane.

According to some embodiments of the present disclosure, a plurality of first exposed regions and a plurality of first metal regions are provided and alternately arranged in the length direction of the bipolar current collector; a plurality of second exposed regions and a plurality of second metal regions are provided and alternately arranged in the length direction of the bipolar current collector. The metal layers on the two surfaces of the first region portion are used to connect the tabs. On the first surface located at the first region portion, the positive electrode metal layer, the first exposed region, the positive electrode metal layer and the first exposed region are alternately arranged. On the second surface located at the first region portion, the second exposed region, the negative electrode metal layer, the second exposed region, and the negative electrode metal layer are alternately arranged. At the first region portion, the metal regions on the two surfaces are arranged in a one-to-one correspondence with the exposed regions.

During connecting the positive electrode tab to the positive electrode metal layer on the first metal region, even if the insulation film layer at the connection position is inevitably damaged, the damaged part of the insulation film layer only has a positive electrode metal layer on one side, and has no metal layer on the other side, as the backside of the positive electrode metal layer is the second exposed region. Therefore, the positive electrode metal layer and the negative electrode metal layer respectively disposed on two surfaces of the insulation film layer will not be in contact and in conduction, even when the insulation film layer is damaged, thereby avoiding the problem of the short circuit between the positive and negative electrodes to a certain extent.

During connecting the negative electrode tab to the negative electrode metal layer on the first region portion, even if the insulation film layer at the connection position is inevitably damaged, the damaged part of the insulation film layer only has a negative electrode metal layer on one side, and has no metal layer on the other side, as the backside of the negative electrode metal layer is the first exposed region. Therefore, the positive electrode metal layer and the negative electrode metal layer respectively disposed on both surfaces of the insulation film layer will not be in contact and in conduction, even when the insulation film layer is damaged, thereby avoiding the problem of the short circuit between the positive and negative electrodes to a certain extent.

According to some embodiments of the present disclosure, in the length direction of the bipolar current collector, a projection, on the reference plane, of an end of each first metal region close to an adjacent second metal region is spaced apart from a projection, on the reference plane, of an end of the adjacent second metal region close to the corresponding first metal region by a predetermined distance.

In a possible implementation manner, along the length direction of the bipolar current collector, a width of each of the plurality of first metal regions is smaller than a width of the corresponding second exposed region, and a width of each of the plurality of second metal regions is smaller than a width of the corresponding first exposed region.

If the first metal region exactly corresponds to the second exposed region, during connecting (for example, welding) the positive electrode tab on the positive electrode metal layer on the first metal region, a welding mark may also exist at the periphery of the positive electrode metal layer on the first metal region, and thus it may result in that the insulation film layer is penetrated by the welding thereby avoiding the contact between the positive electrode metal layer on the first metal region and the negative electrode metal layer on the second metal region, which may result in a short circuit between the positive and negative electrodes. Therefore, the above limitations of the width may greatly reduce the occurrence of this problem. If the second metal region exactly corresponds to the first exposed region, during connecting (for example, welding) the negative electrode tab on the negative electrode metal layer on the second metal region, a welding mark may also exist at the periphery of the negative electrode metal layer on the second metal region, and thus it may result in that the insulation film layer is penetrated by the welding. Thus, the negative electrode metal layer on the second metal region may come into contact with the positive electrode metal layer on the first metal region, resulting in a short circuit between the positive and negative electrodes. Therefore, the above limitation of the width may greatly reduce the occurrence of this problem.

In a possible implementation manner, along the length direction of the bipolar current collector, two sides of the second exposed region exceed two sides of a projection of the corresponding first metal region on the second exposed region, respectively, and two sides of the first exposed region exceed two sides of a projection of the corresponding second metal region on the first exposed region, respectively.

The projection of the first metal region on the second exposed region is entirely located within the second exposed region, and the exposed region is relatively large. Even if the welding marks exist around the periphery of the positive electrode metal layer on the first metal region, the positive electrode metal layer and the negative electrode metal layer can be effectively prevented from being in contact with each other, thereby avoiding the short circuit between the positive and negative electrodes. The projection of the second metal region on the first exposed region is entirely located within the first exposed region, and the exposed region is relatively large. Even if the welding marks exist around the periphery of the negative electrode metal layer on the second metal region, the positive electrode metal layer and the negative electrode metal layer can be effectively prevented from being in contact with each other, thereby avoiding the short circuit between the positive and negative electrodes.

In a possible embodiment, along the length direction of the bipolar current collector, a difference between the width of the second exposed region and the width of the first metal region ranges from 2 mm to 20 mm, and a difference between the width of the first exposed region and the width of the second metal region ranges from 2 mm to 20 mm.

The width difference can effectively avoid the short circuit between the positive and negative electrodes and can also ensure the area of the metal layers in the tab region, facilitating the connection of the tabs.

According to some embodiments of the present disclosure, the insulation film layer further has a second region portion, and wherein the second region portion and the first region portion are sequentially arranged in a width direction of the bipolar current collector.

According to some embodiments of the present disclosure, the first metal region is coated with the positive electrode metal layer to be connected a positive electrode tab, and the second metal region is coated with the negative electrode metal layer to connect a negative electrode tab; and the first surface located at the second region portion is entirely coated with the positive electrode metal layer, and the second surface located at the second region portion is entirely coated with the negative electrode metal layer.

In a possible implementation manner, the positive electrode metal layer is an aluminum metal layer, and the negative electrode metal layer is a copper metal layer or a nickel metal layer.

When the aluminum metal layer is used as the positive electrode of the bipolar current collector and the copper metal layer or the nickel metal layer is used as the negative electrode of the bipolar current collector, the current conduction and confluence ability of the positive and negative electrodes can be improved and easily obtained.

In a second aspect, the present disclosure provides an electrode sheet. The electrode sheet includes: the above bipolar current collector; a positive electrode active material layer disposed on the positive electrode metal layer on a second region of the insulation film layer; a negative electrode active material layer disposed on the negative electrode metal layer on the second region of the insulation film layer; a positive electrode tab disposed on the positive electrode metal layer on the first metal region; and a negative electrode tab disposed on the negative electrode metal layer on the second metal region.

The electrode sheet prepared by using the above bipolar current collector may effectively avoid the short circuit between the positive and negative electrodes when connecting the tabs.

In a third aspect, the present disclosure provides a battery cell. The battery cell includes a plurality of electrode sheets as described above, and a plurality of separators. Each of the plurality of separators is disposed between two adjacent electrode sheets of the plurality of electrode sheets. The positive electrode active material layer and the negative electrode active material layer are respectively arranged on two sides of each of the plurality of separators. Such a battery cell can effectively avoid the short circuit between the positive and negative electrodes, and has high electrical performance.

In a possible implementation manner, the battery cell is a laminated battery cell stack, wherein each of the plurality of electrode sheets comprises a positive electrode tab and a negative electrode tab; and when the plurality of electrode sheets is stacked, the positive electrode tabs of the plurality of electrode sheets overlap, and the negative electrode tabs of the plurality of electrode sheets overlap.

The cell stack can be used to prepare a laminated battery. In the laminated battery, the positive electrode tabs and the negative electrode tabs on the same side are arranged at intervals. The positive electrode tabs overlap, and the overlapped positive electrode tabs are connected to the positive electrode connecting piece; the negative electrode tabs overlap, and the overlapped negative electrode tabs are connected to the negative electrode connecting piece, thereby obtaining a laminated battery having a simple structure.

In a possible implementation manner, the battery cell is a wound battery cell, in a winding direction of the plurality of electrode sheets, a distance between two adjacent positive electrode tabs and a distance between two adjacent two negative electrode tabs are gradually increased in such a manner that, when the plurality of electrode sheets and the plurality of separators are wound, the positive electrode tabs overlap, and the negative electrode tabs overlap.

In a fourth aspect, the present disclosure provides a secondary battery. The secondary battery includes the above battery cell. The electrical performance of the secondary battery is better.

### BRIEF DESCRIPTION OF DRAWINGS

In order to clearly explain technical solutions of embodiments of the present disclosure or the related art, drawings in the description of the embodiments or the related art are briefly described below. It should be understood that the drawings described below merely illustrate some embodiments of the present disclosure, and thus they should not be regarded as limitations of the scope. For those of ordinary skill in the art, other related drawings may also be obtained from these drawings without creative labor and they also fall within the protection scope of the present disclosure.
FIG. 1 is a structural schematic diagram of a bipolar current collector according to an embodiment of the present disclosure;
FIG. 2 is a sectional view along II to II in FIG. 1;
FIG. 3 is a sectional view along III to III in FIG. 1;
FIG. 4 is a schematic diagram of a first structure of an electrode sheet according to an embodiment of the present disclosure;
FIG. 5 is a sectional view along V to V in FIG. 4;
FIG. 6 is a sectional view along VI to VI in FIG. 4;
FIG. 7 is a schematic diagram of a second structure of an electrode sheet according to an embodiment of the present disclosure;
FIG. 8 is a schematic diagram of a third structure of an electrode sheet according to an embodiment of the present disclosure.

### Symbols:

100 - bipolar current collector; 110 - insulation film layer; 120 - positive electrode metal layer; 130 - negative electrode metal layer; 111 - first region portion; 112 - second region portion; 1213 - first metal region; 1214 - first exposed region; 1215 - second metal region; 1216 - second exposed region; 200 - electrode sheet; 210 - positive electrode active material layer; 220 - negative electrode active material layer; 230 - positive electrode tab; 240 - negative electrode tab.

### DESCRIPTION OF EMBODIMENTS

The embodiments of the present disclosure will be described in detail below. The embodiments are illustrated in the accompanying drawings. The embodiments described below with reference to the drawings are merely illustrative for explaining, rather than limiting, the present disclosure.

In the description of the present disclosure, it should be understood that the orientation or positional relationship indicated by the terms "upper", "top", "bottom", "inner", "outer", etc., are based on the orientation or positional relationship illustrated in the drawings, and is only for the convenience of describing the present disclosure and simplifying the description, rather than indicating or implying that the described device or element must have a specific orientation or it is constructed and operated in a specific orientation. Therefore, these terms shall not be understood as limitations of the present disclosure.

In addition, the terms "first" and "second" are only for descriptive purposes, and they cannot be understood as indicating or implying relative importance or implicitly indicating the number of indicated technical features. Therefore, the features defined with "first" or "second" may explicitly or implicitly include at least one of the features. In the description of the present disclosure, "plurality" means at least two, for example, two, three, etc., unless otherwise specifically defined.

In the present disclosure, unless otherwise clearly specified and limited, terms such as "install", "connect with", "connect to", "fix" and the like should be understood in a broad sense. For example, it may be a fixed connection or a detachable connection or connection as one piece; mechanical connection or electrical connection or communicating with each other; direct connection or indirect connection through an intermediate; internal communication of two components or the interaction relationship between two components, unless otherwise clearly limited. For those of ordinary skill in the art, the specific meaning of the above terms in the present disclosure can be understood according to specific circumstances.

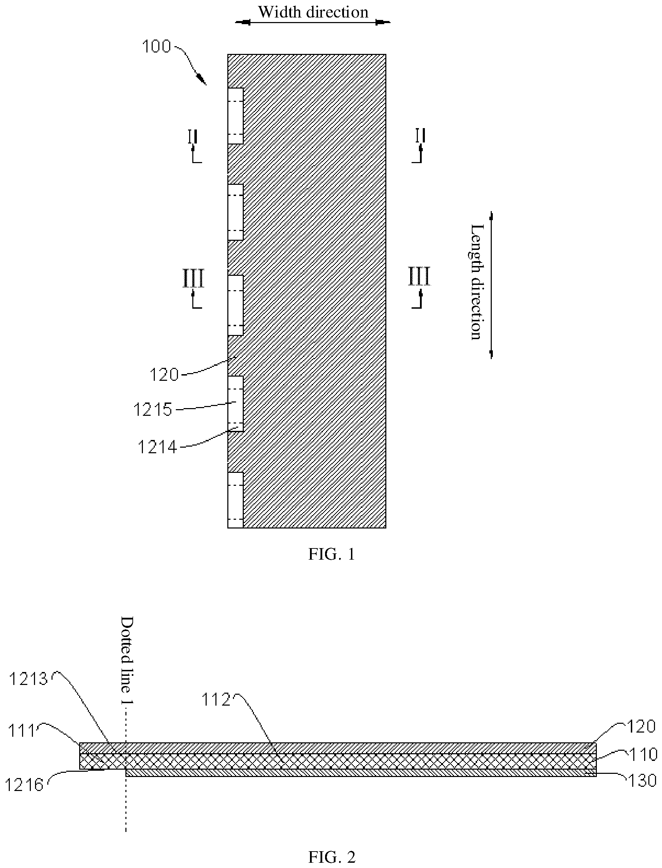

Referring to FIG. 1 to FIG. 3, a bipolar current collector 100 according to an embodiment of the present disclosure includes an insulation film layer 110, a positive electrode metal layer 120, and a negative electrode metal layer 130. The insulation film layer 110 has a first surface and a second surface in a thickness direction. The positive electrode metal layer 120 is disposed on one of the first surface and the second surface, and the negative electrode metal layer 130 is disposed on the other one of the first surface and the second surface. For example, the positive electrode metal layer 120 may be disposed on the first surface, and the negative electrode metal layer 130 may be disposed on the second surface; or the negative electrode metal layer 130 may be disposed on the first surface, and the positive electrode metal layer 120 may be disposed on the second surface.

The insulation film layer 110 has a first region portion 111 configured to be connected to a tab. In a length direction of the bipolar current collector 100, the first surface located at the first region portion 111 has a first exposed region 1214 and a first metal region 1213; the second surface located at the first region portion 111 has a second exposed region 1216 and a second metal region 1215. The positive electrode metal layer 120 is disposed in one of the first metal region 1213 and the second metal region 1215; and the negative electrode metal layer 130 is disposed in the other one of the first metal region 1213 and the second metal region 1215. For example, the positive electrode metal layer 120 is disposed in the first metal region 1213, and the negative electrode metal layer 130 is disposed in the second metal region 1215; or the negative electrode metal layer 130 is disposed in the first metal region 1213, and the positive electrode metal layer 120 is disposed in the second metal region 1215.

A projection of the first metal region 1213 on a reference plane does not exceed a projection of the second exposed region 1216 on the reference plane, and a projection of the second metal region 1215 on the reference plane does not exceed a projection of the first exposed region 1214 on the reference plane. The reference plane is a symmetry surface of the insulation film layer 110 in the thickness direction. For example, taking the symmetry surface of the insulation film layer 110 in the thickness direction as the reference plane, the projection of the first metal region 1213 on the reference plane does not exceed the projection of the second exposed region 1216 on the reference plane, and the projection of the second metal region 1215 on the reference plane does not exceed the projection of the first exposed region 1214 on the reference plane. In this way, when the first metal region 1213 or the second metal region 1215 is connected to the corresponding tab, due to the presence of the exposed region on the surface of the insulation film layer 110 opposite to the first metal region 1213 or the second metal region 1215, it can be avoided that the positive electrode metal layer 120 and the negative electrode metal layer 130 on both surfaces of the insulation film layer 110 are in contact and in conduction, so as to avoid the problem of the short circuit between the positive and the negative electrodes to a certain extent.

In the bipolar current collector 100 according to the embodiment of the present disclosure, the symmetry surface of the insulation film layer 110 in the thickness direction is used as the reference plane; the projection of the first metal region 1213 on the reference plane does not exceed the projection of the second exposed region 1216 on the reference plane; and the projection of the second metal region 1215 on the reference plane does not exceed the projection of the first exposed region 1214 on the reference plane. In this way, when the first metal region 1213 or the second metal region 1215 is connected to the corresponding tab, due to the presence of the exposed region on the surface of the insulation film layer 110 opposite to the first metal region 1213 or the second metal region 1215, it can be avoided that the positive electrode metal layer 120 and the negative electrode metal layer 130 on both surfaces of the insulation film layer 110 are in contact and in conduction, so as to avoid the problem of the short circuit between the positive and negative electrodes to a certain extent.

According to some embodiments of the present disclosure, an area of the projection of the first metal region 1213 on the reference plane is smaller than an area of the projection of the corresponding second exposed region 1216 on the reference plane; and an area of the projection of the second metal region 1215 on the reference plane is smaller than an area of the projection of the corresponding first exposed region 1214 on the reference plane.

For example, referring to FIG. 1, the projection has a rectangle form, and a set is taken as an example for description. The projection region of the first metal region 1213 on the reference plane includes the corresponding projection region of the second exposed region 1216 on the reference plane; and the projection region of the second metal region 1215 on the reference plane includes the corresponding projection region of the first exposed region 1214 on the reference plane. In this way, the projection of the first metal region 1213 on the reference plane is located within the projection of the second exposed region 1216 on the reference plane; and the projection of the second metal region 1215 on the reference plane is located within the projection of the first exposed region 1214 on the reference plane. When the first metal region 1213 or the second metal region 1215 is connected to the corresponding tab, due to the presence of the exposed region on the surface of the insulation film layer 110 opposite to the first metal region 1213 or the second metal region 1215, it can be avoided that the positive electrode metal layer 120 and the negative electrode metal layer 130 on both surfaces of the insulation film layer 110 are in contact and in conduction, so as to avoid the problem of the short circuit between the positive and negative electrodes to a certain extent.

According to some embodiments of the present disclosure, in the length direction of the bipolar current collector 100, a projection of an end of the first metal region 1213 close to an adjacent second metal region 1215 is spaced apart from a projection of an end of the adjacent second metal region 1215 close to the corresponding first metal region 1213 by a predetermined distance, which is conducive to avoiding the short circuit between the positive and negative electrodes

According to some embodiments of the present disclosure, the insulation film layer 110 further has a second region portion 112. The second region portion 112 and the first region portion 111 are sequentially arranged in a width direction of the bipolar current collector 100.

According to some embodiments of the present disclosure, the first metal region 1213 is coated with the positive electrode metal layer 120 to connect a positive electrode tab 230, and the second metal region 1215 is coated with the negative electrode metal layer 130 to connect a negative electrode tab 240. The first surface located at the second region portion 112 is entirely coated with the positive electrode metal layer 120, and the second surface located at the second region portion 112 is entirely coated with the negative electrode metal layer 130.

According to some embodiments of the present disclosure, with reference to FIG. 1, a plurality of first exposed regions 1214 and a plurality of first metal regions 1213 are provided. The plurality of first exposed regions 1214 and the plurality of first metal regions 1213 are alternately arranged in the length direction of the bipolar current collector 100. A plurality of second exposed regions 1216 and a plurality of second metal regions 1215 are provided. The plurality of second exposed regions 1216 and the plurality of second metal regions 1215 are alternately arranged in the length direction of the bipolar current collector 100.

In some embodiments, the metal layers on the two surfaces of the first region portion 111 are used to connect the tabs. On the first surface located at the first region portion 111, the positive electrode metal layer 120, the first exposed region 1214, the positive electrode metal layer 120, and the first exposed regions 1214 are alternately arranged; and on the second surface located at the first region portion 111, the second exposed region 1216, the negative electrode metal layer 130, the second exposed region 1216, and the negative electrode metal layer 130 are alternately arranged. At the first region portion 111, the metal regions and the exposed regions on one on the two surfaces are arranged in a one-to-one correspondence.

When connecting the positive electrode tab 230 to the positive electrode metal layer 120 in the first metal region 1213, even if the insulation film layer 110 at the connection position is inevitably damaged, the damaged part of the insulation film layer 110 only has the positive electrode metal layer 120 on one side, and has no metal layer on the other side, as the backside of the positive electrode metal layer 120 is the second exposed region 1216. Therefore, the positive electrode metal layer 120 and the negative electrode metal layer 130 respectively disposed on two surfaces of the insulation film layer 110 will not be in contact and in conduction, even when the insulation film layer 110 is damaged, thereby avoiding the problem of the short circuit between the positive and negative electrodes to a certain extent.

When connecting the negative electrode tab 240 to the negative electrode metal layer 130 in the first region portion 111, even if the insulation film layer 110 at the connection position is inevitably damaged, the damaged part of the insulation film layer 110 only has the negative electrode metal layer 130 on one side, and has no metal layer on the other side, as the backside of the negative electrode metal layer 130 is an exposed region 1214. Therefore, the positive electrode metal layer 120 and the negative electrode metal layer 130 respectively disposed on two surfaces of the insulation film layer 110 will not be in contact and in conduction, even when the insulation film layer 110 is damaged, thereby avoiding the problem of the short circuit between the positive and negative electrodes to a certain extent.

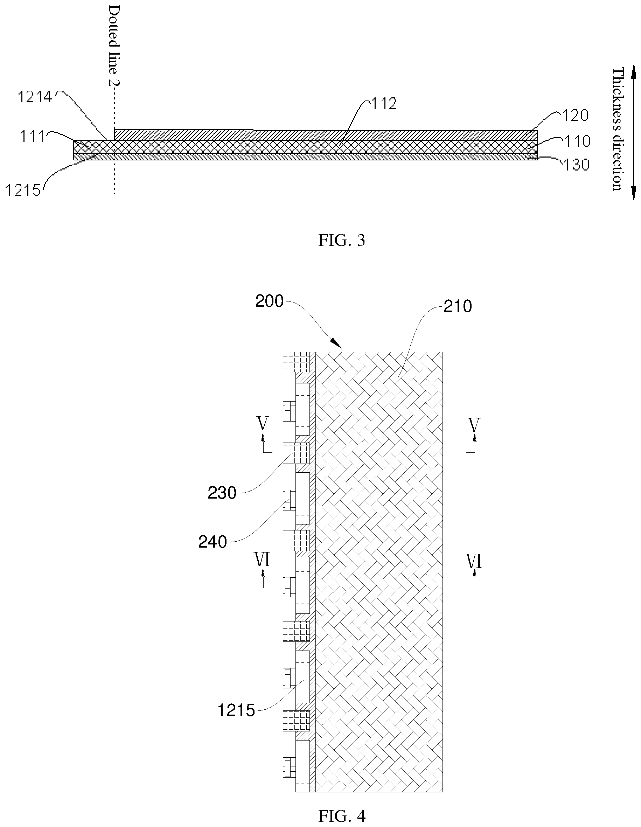

FIG. 1 is a structural schematic diagram of a bipolar current collector 100 according to an embodiment of the present disclosure; FIG. 2 is a sectional view along II to II in FIG. 1; and FIG. 3 is a sectional view along III to III in FIG. 1. Referring to FIG. 1 to FIG. 3, in the embodiments of the present disclosure, in a thickness direction of the bipolar current collector 100, the bipolar current collector 100 includes an insulation film layer 110, a positive electrode metal layer 120, and a negative electrode metal layer 130 disposed on both surfaces of the insulation film layer 110. In a width direction of the bipolar current collector 100, the insulation film layer 110 has a first region portion 111 and a second region portion 112 arranged in sequence. The first region portion 111 is located on one side of the second region portion 112. As illustrated in FIG. 2 and FIG. 3, the region on the left side of dotted line 1 and dotted line 2 is the first region portions 111, and region on the right side of dotted line 1 and dotted line 2 is the second region portions 112.

Optionally, the material of the insulation film layer 110 may be a polymer insulation layer, for example, a film layer made of polystyrene, polypropylene, polyester, polycarbonate, polytetrafluoroethylene, polyimide; the material of the insulation film layer 110 may also be synthetic fiber insulating paper, for example, aramid fiber paper, polyester fiber paper; or the material of the insulation film layer 110 may be various insulation tapes, and the like.

In the embodiments of the present disclosure, in a length direction of the bipolar current collector 100, first exposed regions 1214, and first metal regions 1213 covered by the positive electrode metal layer 120 are alternatively arranged on the first surface located at the first region portion 111; second exposed regions 1216, and second metal regions 1215 covered by the negative electrode metal layer 130 are alternatively arranged on the second surface located at the first region portion 111. The first region portion 111 of the insulation film layer 110, together with the positive electrode metal layer 120 and the negative electrode metal layer 130 on the first region portion 111, form a tab region. The positive electrode metal layer 120 is formed on the first surface located at the second region portion 112, and the negative electrode metal layer 130 is formed on the second surface of the second region portion 112. The second region portion 112 of the insulation film layer 110, together with the positive electrode metal layer 120 and the negative electrode metal layer 130 on the second region portion 112, form a coating region.

Optionally, the positive electrode metal layer 120 is an aluminum metal layer, and the negative electrode metal layer 130 is a copper metal layer or a nickel metal layer. Optionally, the positive electrode metal layer 120 is an aluminum metal layer for conducting the positive current, and the negative electrode metal layer 130 is a copper metal layer for conducting the negative current. In the present disclosure, the positive electrode metal layer 120 is not limited to an aluminum metal layer, as long as the positive electrode metal layer serving as the current collector is within the scope of protection of the present disclosure; and the negative electrode metal layer 130 is not limited to a copper metal layer, as long as the negative electrode metal layer serving as the current collector is within the scope of protection of the present disclosure.

Optionally, a thickness of the positive electrode metal layer 120 ranges from 20 nm to 1500 nm, and a thickness of the negative electrode metal layer 130 ranges from 30 nm to 2500 nm. The layer structure with the above thickness can ensure the over-current capability, and thus the current collector has better electrical conductivity. The thickness of the positive electrode metal layer 120 is 20 nm, 100 nm, 500 nm, 800 nm, 1000 nm, or 1500 nm; and the thickness of the negative electrode metal layer 130 is 30 nm, 200 nm, 600 nm, 900 nm, 1500 nm, 2000 nm, or 2500 nm.

Optionally, in order to form the above bipolar current collector 100 structure, a positive electrode metal layer 120 may be deposited on one surface of the insulation film layer 110; and a negative electrode metal layer 130 may be deposited on the other surface of the insulation film layer 110. One side of the bipolar current collector 100 is selected as a tab region. At the tab region, a part of the positive electrode metal layer 120 and a part of the negative electrode metal layer 130 may be removed to form a first exposed region 1214 and a second exposed region 1216, thereby obtaining the structure of the bipolar current collector 100 as illustrated in FIG. 1.

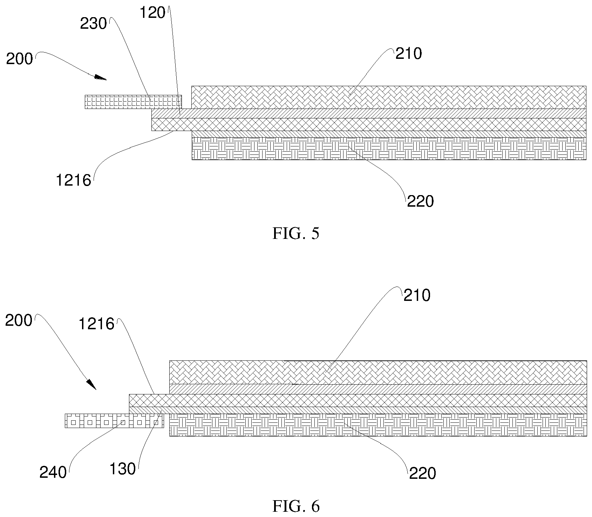

FIG. 4 is a structural schematic diagram of an electrode sheet 200 according to an embodiment of the present disclosure; FIG. 5 is a sectional view along V to V in FIG. 4; and FIG. 6 is a sectional view along VI to VI in FIG. 4. Referring to FIG. 4 to FIG. 6, in the embodiment of the present disclosure, an electrode sheet 200 includes the above-described bipolar current collector 100, a positive electrode active material layer 210, a negative electrode active material layer 220, and positive electrode tabs 230, and negative electrode tabs 240. The positive electrode active material layer 210 is disposed on the positive electrode metal layer 120 of the second region portion 112 of the insulation film layer, and the negative electrode active material layer 220 is disposed on the negative electrode metal layer 130 of the second region portion 112 of the insulation film layer. One positive electrode tab 230 is disposed on the positive electrode metal layer 120 on one of the first metal regions 1213, and one negative electrode tab 240 is disposed on the negative electrode metal layer 130 on one second metal region 1215.

Optionally, the positive electrode tab 230 is welded to the positive electrode metal layer 120, and the negative electrode tab 240 is welded to the negative electrode metal layer 130. When the tabs are connected by welding, the connection between the tabs and the metal layers can be more robust. However, during the welding of the tabs to the metal layers, the problem of welding-penetration of the insulation film layer 110 is likely to occur.

Therefore, in the embodiment of the present disclosure, a projection of the first metal region 1213 in the thickness direction of the insulation film layer 110 does not exceed the second exposed region 1216. As illustrated in FIG. 2, on the left side of the dotted line 1, The upper surface of the insulation film layer 110 is the positive electrode metal layer 120, and the lower surface of the insulation film layer 110 is the second exposed region 1216. When connecting the positive electrode tab 230 to the positive electrode metal layer 120, even if the insulation film layer 110 at the connection position is inevitably damaged (the insulation film layer 110 is penetrated during the welding), the damaged part of the insulation film layer 110 only has the positive electrode metal layer 120 on one side, and has no metal layer on the other side, as the backside of the positive electrode metal layer 120 is the second exposed region 1216. Therefore, the positive electrode metal layer 120 and the negative electrode metal layer 130 respectively disposed on two surfaces of the insulation film layer 110 will not be in contact and in conduction, even when the insulation film layer 110 is damaged, thereby avoiding the problem of the short circuit between the positive and negative electrodes to a certain extent.

In the embodiment of the present disclosure, the projection of the second metal region 1215 in the thickness direction of the insulation film layer 110 does not exceed the first exposed region 1214. As illustrated in FIG. 3, on the left side of the dotted line 2, the lower surface of the insulation film layer 110 is the negative electrode metal layer 130, and the upper surface of the insulation film layer 110 is the first exposed region 1214. When connecting the negative electrode tab 240 to the negative electrode metal layer 130, even if the insulation film layer 110 at the connection position is inevitably damaged (the insulation film layer 110 is penetrated during the welding), the damaged part of the insulation film layer 110 only has the negative electrode metal layer 130 on one side, and has no metal layer on the other side, as the backside of the negative electrode metal layer 130 is the first exposed region 1214. Therefore, the positive electrode metal layer 120 and the negative electrode metal layer 130 respectively disposed on two surfaces of the insulation film layer 110 will not be in contact and in conduction, even when the insulation film layer 110 is damaged, thereby avoiding the problem of the short circuit between the positive and negative electrodes to a certain extent.

Optionally, a shape of the first metal region 1213 corresponds to a shape of the second exposed region 1216; a shape of the second metal region 1215 corresponds to a shape of the first exposed region 1214; the projection of the first metal region 1213 in the thickness direction of the insulation film layer 110 overlaps the second exposed region 1216; and the projection of the second metal region 1215 in the thickness direction of the insulation film layer 110 overlaps the first exposed region 1214. When welding the positive electrode tab 230 with the positive electrode metal layer 120 in the first metal region 1213, it is optimal to weld the positive electrode tab 23 in the middle part of the positive electrode metal layer 120 in the first metal region 1213, and avoid to weld it on an edge of the positive electrode metal layer 120 in the first metal region 1213. When welding the negative electrode tab 240 with the negative electrode metal layer 130 in the second metal region 1215, it is optimal to weld it in the middle part of the negative electrode metal layer 130 in the second metal region 1215, and avoid to weld it on an edge of the negative electrode metal layer 130 in the second metal region 1215. In this way, the edge of the insulation film layer 110 is prevented from being penetrated by the welding, and the contact of the metal layers on the two surfaces is prevented, thereby improving the short circuit between the positive and negative electrodes to a certain extent.

When connecting (e.g., welding) the positive electrode tab 230 on the positive electrode metal layer 120 in the first metal region 1213, a welding mark may also exist at the periphery of the positive electrode metal layer 120 in the first metal region 1213, and thus it may result in that the insulation film layer 110 is penetrated by the welding, thereby avoiding the contact between the positive electrode metal layer 120 in the first metal region 1213 and the negative electrode metal layer 130 in the second metal region 1215, which may result in a short circuit between the positive electrode and the negative electrode. Therefore, in another embodiment of the present disclosure, further referring to FIG. 1 and FIG. 4, in the length direction of the bipolar current collector 100, the first metal region 1213 has a smaller width than the corresponding second exposed region 1216, and the second metal region 1215 has a smaller width than the corresponding first exposed region 1214. The above limitations of the width can greatly reduce the occurrence of the above-mentioned problem. Even if the insulation film layer 110 corresponding to the edge of the first metal layer is penetrated by the welding, the conduction between the positive and negative electrodes may be effectively avoided, as the corresponding exposed region is wider.

Further referring to FIG. 1 and FIG. 4, in the embodiment of the present disclosure, in the length direction of the bipolar current collector 100, two sides of the second exposed region 1216 exceed two sides of a projection of the corresponding first metal region 1213 on the second exposed region 1216, respectively, and two sides of the first exposed region 1214 exceed two sides of a projection of the corresponding second metal region 1215 on the first exposed region 1214, respectively. In FIG. 1 and FIG. 4, the dotted region is the second metal region 1215. It can be seen from the drawings that the area of the first metal region 1213 is smaller than the area of the second exposed region 1216, and the first metal region 1213 is entirely located within the second exposed region 1216; the area of the second metal region 1215 is smaller than the area of the first exposed region 1214, and the second metal region 1215 is entirely located within the first exposed region 1214. In this way, the contact between the positive electrode metal layer 120 and the negative electrode metal layer 130 can be effectively avoided during the welding of tabs, thereby avoiding the short circuit between the positive electrode and the negative electrode.

Optionally, in the length direction of the bipolar current collector 100, a difference between the width of the second exposed region 1216 and width of the first metal region 1213 ranges from 2 mm to 20 mm; and a difference between the width of the first exposed region 1214 and the width of the second metal region 1215 ranges from 2 mm to 20 mm. The width difference can effectively avoid the short circuit between the positive and negative electrodes and can also ensure the area of the metal layer on the tab region, for connecting the tabs.

The difference between the width of the second exposed region 1216 and the width of the first metal region 1213 is 2 mm, 8 mm, 15 mm, or 20 mm, etc.; and the difference between the width of the first exposed region 1214 and the width of the second metal region 1215 is 2 mm, 8 mm, 15 mm, or 20 mm, etc.

In other embodiments, one side of the projection of the first metal layer on the thickness direction of the insulation film layer 110 may correspond to the edge of the second exposed region 1216, and the other side may be located within the second exposed region 1216; one side of the projection of the second metal region 1215 in the thickness direction of the insulation film layer 110 corresponds to the edge of the first exposed region 1214, and the other side is located within the first exposed region 1214, which is not limited in the present disclosure.

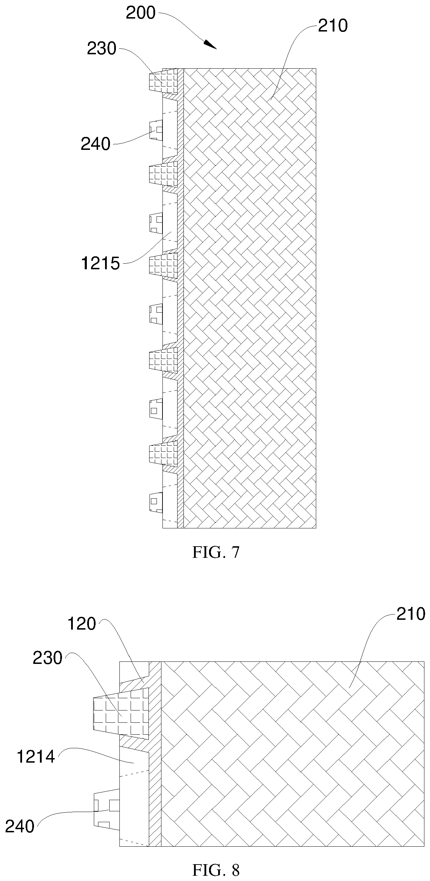

FIG. 7 is a schematic diagram of a second structure of an electrode sheet 200 according to an embodiment of the present disclosure. Referring to FIG. 7, in other embodiments, both the positive electrode tab 230 and the negative electrode tab 240 has substantially a trapezoid structure. That is, along the length direction of the bipolar current collector 100, the width of a side of the tab close to the coating region is greater, while the width of a side of the tab facing away from the coating region is smaller. In this way, a welding area between the tab and the metal layer is relatively larger, allowing the welding between the tab and the metal layer to be firmer. In addition, a welding area between the tab and the connecting piece is relatively smaller, the number of tabs can be reduced and the energy density of the battery can be increased, while ensuring the welding firmness. The shapes of the first metal region 1213 and the second metal region 1215 correspond to the shapes of the positive electrode tab 230 and the negative electrode tab 240, respectively. Therefore, the positive electrode tab 230 can be connected to the positive electrode metal layer 120 in the first metal region 1213, and the negative electrode tab 240 can be connected to the negative electrode metal layer 130 in the second metal region 1215.

The above electrode sheet 200 may be used in a secondary battery. The secondary battery may be a laminated battery, a wound battery, or the like, which is not limited in the present disclosure. During the manufacturing of the secondary battery, a battery cell is first manufactured using the electrode sheet 200, and the secondary battery is then manufactured using the battery cell.

The battery cell includes a plurality of the electrode sheets 200 as described above, and a plurality of separators. One separator is disposed between two adjacent electrode sheets 200. The positive electrode active material layer 210 and the negative electrode active material layer 220 are respectively arranged on two sides of the separators.

FIG. 8 is a structural schematic diagram of a battery electrode sheet 200 in a battery cell stack according to an embodiment of the present disclosure. Please refer to FIG. 8, the battery cell is a laminated battery cell stack. Each electrode sheet 200 includes a positive electrode tab 230 and a negative electrode tab 240. When the plurality of electrode sheets 200 is stacked, the positive electrode tabs 230 of the plurality of electrode sheets 200 overlap, and the negative electrode tabs 240 of the plurality of electrode sheets 200 overlap. The overlapping positive electrode tabs 230 are welded to a positive electrode connecting piece, and the overlapping negative electrode tabs 240 are connected to the negative electrode connecting piece, for manufacturing a secondary battery.

In another embodiment, the battery cell is a wound battery cell. In a winding direction of the electrode sheets 200, a distance between two adjacent positive electrode tabs 230 and a distance between two adjacent negative electrode tabs 240 are gradually increased. That is, a diameter of an inner ring of the wound battery cell is small, and a diameter of an outer ring is great, such that it is necessary to set different tab distances. In this way, when the electrode sheet 200 and the separator are wound, a plurality of positive electrode tabs 230 overlap, and a plurality of negative electrode tabs 240 overlap. The overlapping positive electrode tabs 230 are welded to a positive electrode connecting piece, and the overlapping negative electrode tabs 240 are connected to a negative electrode connecting piece, for manufacturing a secondary battery.

The bipolar current collector 100 and the electrode sheet 200 according to the embodiments of the present disclosure have the following beneficial effects.
(1) When the positive electrode metal layer 120 in the first metal region 1213 is connected to the positive electrode tab 230 or the negative electrode metal layer 130 in the second metal region 1215 is connected to the negative electrode tab 240 (for example, by welding), even if the insulation film layer 110 is damaged during the connection process, it is still possible to prevent the conduction between the aluminum metal layer and the copper metal layer, due to the presence of the exposed region on the backside of the tab connection position, thereby avoiding the problem of short circuit of positive and negative electrodes.
(2) Along the length direction of the bipolar current collector 100, two sides of the second exposed region 1216 exceed two sides of a projection of the corresponding first metal region 1213 on the second exposed region 1216, respectively, and two sides of the first exposed region 1214 exceed two sides of a projection of the corresponding second metal region 1215 on the first exposed region 1214, respectively. Even if the welding mark is formed on the entire positive electrode metal layer 120 in the first metal region 1213 and the welding mark is formed on the entire negative electrode metal layers 130 in the second metal region 1215, the problem of conduction between the aluminum metal layer and the copper metal layer, which is caused by the damage of the insulation film layer 110 during the welding process, can be effectively avoided, thereby effectively avoiding the short circuit between the positive and negative electrodes.
(3) The plurality of overlapping positive electrode tabs 230 is connected to the positive electrode connecting sheet, and the plurality of overlapping negative electrode tabs 240 is connected to the negative electrode connecting sheet, such that the battery cell and secondary battery can be manufactured in a relatively simple manner.

The above is only a part of the embodiments of the present disclosure, and they are not intended to limit the present disclosure. Those skilled in the art can make various modifications and changes based on the present disclosure. Any modification, equivalent replacement, improvement, etc., which are made without departing from the spirit and principle of the present disclosure, shall be included in the protection scope of the present disclosure.

In the specification, description with reference to the terms "an embodiment", "some embodiments", "an example", "a specific example", or "some examples" means that a particular feature, structure, material, or characteristic described in connection with the embodiment or example are included in at least one embodiment or example of the present disclosure. The schematic representations of the above terms throughout this specification are not necessarily referring to the same embodiment or example of the present disclosure. Furthermore, the described particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of present disclosure are illustrated and described above, it should be understood that above embodiments are merely illustrative and cannot be construed as limitations of the present disclosure. For those skilled in the art, changes, alternatives, and modifications can be made to the embodiments without departing from the scope of the present disclosure.

## Claims

1. A bipolar current collector, comprising:
an insulation film layer;
a positive electrode metal layer; and
a negative electrode metal layer, wherein:
the insulation film layer has a first surface and a second surface in a thickness direction, the positive electrode metal layer being disposed on one of the first surface and the second surface, and the negative electrode metal layer being disposed on the other one of the first surface and the second surface,
the insulation film layer has a first region portion configured to be connected to a tab,
in a length direction of the bipolar current collector, the first surface located at the first region portion has a first exposed region and a first metal region, and the second surface located at the first region portion has a second exposed region and a second metal region,
the positive electrode metal layer is disposed in one of the first metal region and the second metal region, and the negative electrode metal layer is disposed in the other one of the first metal region and the second metal region, and
a projection of the first metal region on a reference plane does not exceed a projection of the second exposed region on the reference plane, and a projection of the second metal region on the reference plane does not exceed a projection of the first exposed region on the reference plane, the reference plane being a symmetry surface of the insulation film layer in the thickness direction.

2. The bipolar current collector according to claim 1, wherein an area of the projection of the first metal region on the reference plane is smaller than an area of the projection of the corresponding second exposed region on the reference plane, and an area of the projection of the second metal region on the reference plane is smaller than an area of the projection of the corresponding first exposed region on the reference plane.

3. The bipolar current collector according to claim 1 or 2, wherein a plurality of first exposed regions and a plurality of first metal regions are provided and alternately arranged in the length direction of the bipolar current collector, and
wherein a plurality of second exposed regions and a plurality of second metal regions are provided and alternately arranged in the length direction of the bipolar current collector.

4. The bipolar current collector according to claim 3, wherein, in the length direction of the bipolar current collector, a projection, on the reference plane, of an end of each first metal region close to an adjacent second metal region is spaced apart from a projection, on the reference plane, of an end of the adjacent second metal region close to the corresponding first metal region by a predetermined distance.

5. The bipolar current collector according to claim 3, wherein, along the length direction of the bipolar current collector,
a width of each of the plurality of first metal regions is smaller than a width of the corresponding second exposed region, and
a width of each of the plurality of second metal regions is smaller than a width of the corresponding first exposed region.

6. The bipolar current collector according to claim 5, wherein, along the length direction of the bipolar current collector,
two sides of the second exposed region exceed two sides of a projection of the corresponding first metal region on the second exposed region, respectively, and
two sides of the first exposed region exceed two sides of a projection of the corresponding second metal region on the first exposed region, respectively.

7. The bipolar current collector according to claim 5, wherein, along the length direction of the bipolar current collector,
a difference between the width of the second exposed region and the width of the first metal region ranges from 2 mm to 20 mm, and
a difference between the width of the first exposed region and the width of the second metal region ranges from 2 mm to 20 mm.

8. The bipolar current collector according to any one of claims 1 to 7, wherein the insulation film layer further has a second region portion, and the second region portion and the first region portion are sequentially arranged in a width direction of the bipolar current collector.

9. The bipolar current collector according to claim 8, wherein the first metal region is coated with the positive electrode metal layer to be connected to a positive electrode tab, and the second metal region is coated with the negative electrode metal layer to connect a negative electrode tab; and
wherein the first surface located at the second region portion is entirely coated with the positive electrode metal layer, and the second surface located at the second region portion is entirely coated with the negative electrode metal layer.

10. The bipolar current collector according to claim 9, wherein the positive electrode metal layer is an aluminum metal layer, and wherein the negative electrode metal layer is a copper metal layer or a nickel metal layer.

11. An electrode sheet, comprising:
the bipolar current collector according to any one of claims 1 to 10;
a positive electrode active material layer disposed on the positive electrode metal layer on a second region portion of the insulation film layer;
a negative electrode active material layer disposed on the negative electrode metal layer on the second region portion of the insulation film layer;
a positive electrode tab disposed on the positive electrode metal layer on the first metal region; and
a negative electrode tab disposed on the negative electrode metal layer on the second metal region.

12. A battery cell, comprising:
a plurality of electrode sheets, wherein each of the plurality of electrode sheets is the electrode sheet according to claim 11; and
a plurality of separators, wherein each of the plurality of separators is disposed between two adjacent electrode sheets, and wherein the positive electrode active material layer and the negative electrode active material layer are respectively disposed at two sides of each of the plurality of separators.

13. The battery cell according to claim 12, wherein the battery cell is a laminated battery cell stack, wherein each of the plurality of electrode sheets comprises a positive electrode tab and a negative electrode tab, and wherein when the plurality of electrode sheets is stacked, the positive electrode tabs of the plurality of electrode sheets overlap, and the negative electrode tabs of the plurality of electrode sheets overlap.

14. The battery cell according to claim 12, wherein the battery cell is a wound battery cell, wherein in a winding direction of the plurality of electrode sheets, a distance between two adjacent positive electrode tabs and a distance between two adjacent two negative electrode tabs are gradually increased in such a manner that, when the plurality of electrode sheets and the plurality of separators are wound, the positive electrode tabs overlap, and the negative electrode tabs overlap.

15. A secondary battery, comprising the battery cell according to any one of claims 12 to 14.
